# EUROPÄISCHE PATENTSCHRIFT

(11) **EP 0 661 469 B1**
(45) Veröffentlichungstag und Bekanntmachung des Hinweises auf die Patenterteilung: **19.02.1997**
(21) Anmeldenummer: 94112690.6
(22) Anmeldetag: 13.08.1994
(51) Int. Cl.: F16C 13/00, B21B 27/08, F26B 13/18

(54) **Beheizbare Walze**
Heatable roll
Rouleau chauffable

(30) Priorität: 17.12.1993 DE 4343172
(43) Veröffentlichungstag der Anmeldung: 05.07.1995
(73) Patentinhaber: Walzen Irle GmbH, D-57250 Netphen (DE)
(72) Erfinder: Conrad, Hans-Rolf, D-41539 Dormagen (DE)
(74) Vertreter: Knoblauch, Ulrich, Dr.-Ing.

(56) Entgegenhaltungen:
- DE-C- 4 202 373
- DE-U- 8 490 184
- DE-U- 9 306 450

## Beschreibung

Die Erfindung bezieht sich auf eine beheizbare Walze für Kalander, Glättwerke u.dgl. mit sich über die Walzenlänge erstreckenden Heizkanälen, die an einem Ende je ein Anschlußsystem für die Zufuhr eines Wärmeträgers und am anderen Ende ein Anschlußsystem für dessen Abfuhr aufweisen.

Bei den bekannten Walzen dieser Art (EP 0 158 220 A2) sind die Heizkanäle als Längsbohrungen ausgeführt, die an ihren Enden über je einen Anschlußkanal mit je einem gemeinsamen Raum verbunden sind. Ein Wärmeträger wird über einen den einen Walzenzapfen durchsetzenden Kanal zugeführt und über einen den anderen Zapfen oder die Walze und den erstgenannten Zapfen durchsetzenden Kanal wieder abgeführt. Dies ergibt eine recht gleichmäßige Beheizung über die gesamte Walzenbreite. Ähnliches gilt für eine bekannte Walze, bei der ein Teil der Längsbohrungen für die Hinströmung und der andere Teil für die Rückströmung benutzt wird und die beiden Anschlußsysteme einander benachbart sind (DE-U 90 14 117.2).

Oftmals stimmt die Breite der Warenbahn nicht mit der Länge der Walze überein. Dies hat zur Folge, daß in den Endbereichen der Walze weniger Wärme abgeführt wird und daher eine Überhitzung stattfindet. Dies hat unerwünschte Folgen sowohl bei der Warenbahn, die an den Rändern austrocknet, als auch bei der Walze, die im Randbereich eine Durchmesservergrößerung erfährt, was Schwierigkeiten bei der Schaffung eines gleichmäßigen Streckenlastprofils hervorruft.

In der Figur 2 der DE-U-93 06 450 wird eine gattungsgemäße Walze gezeigt, bei der das Anschlußsystem für die Abfuhr drei Anschlußkanäle aufweist, die von einem gemeinsamen Raum ausgehen und einzeln zu drosseln sind. An einem Walzenende münden zwei dieser Kanäle mit unterschiedlichem Abstand vom Walzenende in den Heizkanal, während der dritte Kanal nahe dem anderen Walzenende in den Heizkanal mündet. Diese Walze erlaubt eine gezielte Einstellung der Temperatur im Randbereich.

Der Erfindung liegt die Aufgabe zugrunde, eine beheizbare Walze der eingangs beschriebenen Art anzugeben, bei der mit einfachen Mitteln eine bessere Temperaturverteilung erzielt wird.

Diese Aufgabe wird erfindungsgemäß dadurch gelöst, daß jedes Anschlußsystem mindestens zwei Anschlußkanäle aufweist, die von einem gemeinsamen Raum ausgehen, mit unterschiedlichem Abstand vom Walzenende in den Heizkanal münden und durch eine Auswahlvorrichtung einzeln wirksam zu machen sind.

Mit Hilfe der Auswahlvorrichtung läßt sich bestimmen, mit welchem Abstand vom Walzenende der Wärmeträger in den jeweiligen Heizkanal eintritt. Auf diese Weise kann der vom Wärmeträger beheizte Abschnitt der Walze der Breite der zu behandelnden Materialbahn angepaßt werden. In den nicht durchströmten Abschnitten des Kanalsystems stagniert der Wärmeträger, so daß dort keine Wärmezufuhr erfolgt.

Als Auswahlvorrichtung kommen die verschiedensten Mittel in Betracht, beispielsweise Sperrelemente, wie Schraubstopfen, welche jeweils nur einen der mehreren Anschlußkanäle geöffnet lassen. Besonders empfehlenswert ist es aber, wenn die Auswahlvorrichtung durch ein Umschaltventil gebildet ist. Ein solches Ventil läßt sich leicht betätigen, so daß eine rasche Umstellung vorgenommen werden kann, wenn eine Bahn anderer Breite behandelt werden soll.

Mit Vorteil ist dafür gesorgt, daß die Auswahlvorrichtung einen Schieber mit einer Steueröffnung aufweist, und daß die Öffnungsquerschnitte der Anschlußkanäle längs der Bahn der Steueröffnung nebeneinander angeordnet sind. Ein solcher Schieber ist ein einfaches Ventilelement, das platzsparend untergebracht werden kann und sich leicht betätigen läßt.

Es empfiehlt sich, daß die Auswahlvorrichtungen in Abhängigkeit von der Temperatur der Walzenendabschnitte regelbar sind. Je höher diese Temperatur ist, umso kürzer sollte der durchströmte Abschnitt der Heizkanäle sein. Denn die Übertemperatur an den Walzenenden läßt erkennen, daß die, behandelte Bahn nicht genügend Wärme von den Walzenenden abführt.

Hierbei ist es vorteilhaft, daß jeder Auswahlvorrichtung ein eigener Temperaturregelkreis zugeordnet ist. Dies führt dazu, daß jede Auswahlvorrichtung unabhängig von den anderen Auswahlvorrichtungen verstellt wird. Dies erhöht zum einen die Betriebssicherheit und bietet zum andern die Möglichkeit, die Temperatur des Walzenmantels in Umfangsrichtung sehr gleichmäßig zu halten.

In weiterer Ausgestaltung der Erfindung ist dafür gesorgt, daß die Auswahlvorrichtung durch ein Dehnstoffsystem verstellbar ist, das ein Betätigungselement zur Verstellung der Auswahlvorrichtung und einen Fühlerhohlraum im Mantelendbereich aufweist. Es bedarf daher keiner nach außen führenden Leitungen u.dgl., um den Temperaturregelkreis zu bilden.

Sodann ist es günstig, daß der Fühlerhohlraum eine zum Heizkanal parallele und ihm benachbarte Bohrung aufweist. Der Fühlerhohlraum mißt daher die Temperatur in unmittelbarer Nähe des überwachten Heizkanals, so daß dessen Temperatureinfluß direkt erfaßt werden kann.

Die Erfindung wird nachstehend anhand eines in der Zeichnung dargestellten bevorzugten Ausführungsbeispiels näher erläutert. Es zeigen
- Fig. 1: einen Längsschnitt durch eine erfindungsgemäße Walze,
- Fig. 2: einen Querschnitt längs der Linie A-A in Fig. 1 und
- Fig. 3: eine vergrößerte Darstellung der Auswahlvorrichtung.

Die veranschaulichte Walze 1 besitzt einen Walzenkörper 2 mit zwei Zapfen 3 und 4, welche über Flansche 5 bzw. 6 mit dem Walzenkörper 1 verbunden sind. Die Umfangsfläche 7 der Walze 1 dient dazu, eine Bahn, beispielsweise aus Papier, Textilien, Vlies, Folie u.dgl., zu führen, um diese Bahn zu beheizen und gegebenenfalls in Verbindung mit einer Gegenwalze zu pressen.

Es ist eine Vielzahl von zur Walzenachse parallelen Heizkanälen 8, die als Längsbohrungen nahe der Umfangsfläche verlaufen, vorgesehen. Jeder Heizkanal besitzt an seinem Zulaufende ein Anschlußsystem 9, das ihn mit einem gemeinsamen Raum 10 verbindet, der über einen Ringquerschnitt aufweisenden Kanal 11 mit einem Wärmeträger-Zulauf 12 verbunden ist, während am Ablaufende ein Anschlußsystem 13 vorgesehen ist, das den Heizkanal 8 mit einem gemeinsamen Raum 14 verbindet, der über eine Mittelbohrung 15 im Walzenkörper 2 und ein den Zapfen 4 durchsetzendes Rohr 16 mit einem Wärmeträger-Ablauf 17 verbunden ist.

Das Anschlußsystem 9 besitzt drei Anschlußkanäle 18, 19 und 20, die mit unterschiedlich großem Abstand vom Walzenmantelende 21 in den Heizkanal 8 münden. Eine Auswahlvorrichtung 22 wählt den jeweils wirksamen Anschlußkanal, hier den Anschlußkanal 18, aus. In gleicher Weise besitzt die Anschlußvorrichtung 13 drei Anschlußkanäle 23, 24 und 25, die einen unterschiedlichen Abstand vom linken Walzenende 26 haben. Hier ist eine Auswahlvorrichtung 27 für das Wirksammachen jeweils eines Anschlußkanals, hier des Anschlußkanals 23, vorgesehen.

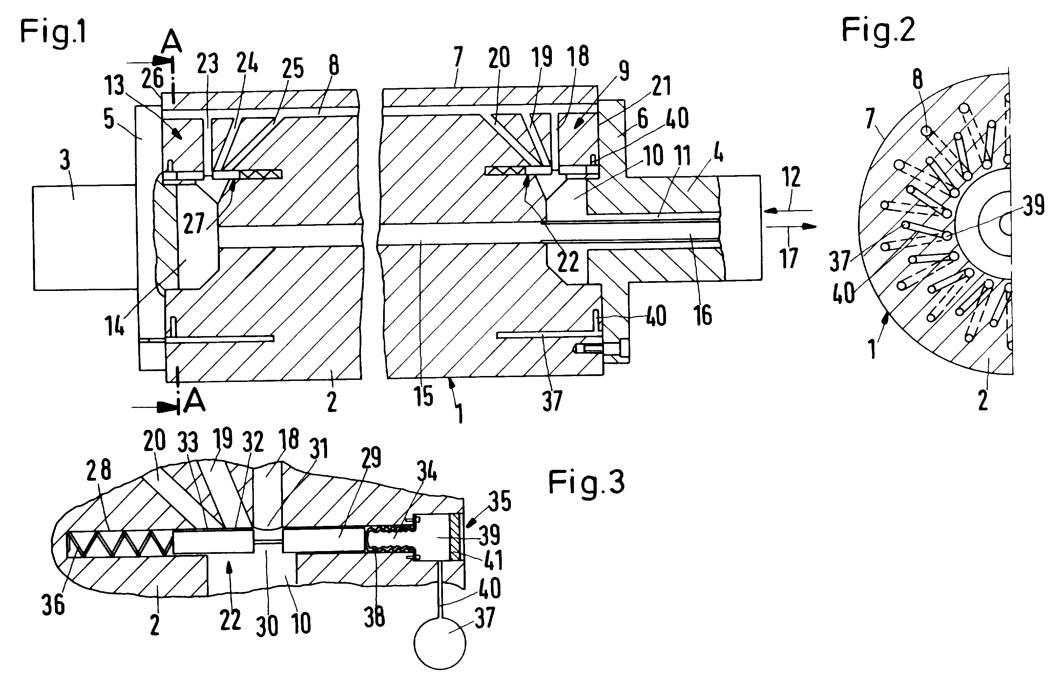

In Fig. 3 ist eine Ausführungsform der Auswahlvorrichtung 22 näher veranschaulicht. Im Walzenkörper 2 ist eine Axialbohrung 28 vorgesehen, in der ein kolbenförmiger Schieber 29 mit einer als Nut ausgebildeten Steueröffnung 30 verschiebbar gelagert ist. Die Öffnungsquerschnitte 31, 32 und 33 der drei Anschlußkanäle 18, 19 und 20 sind nebeneinander längs der Bohrung 28 vorgesehen. Der Schieber 29 ist an einem Ende durch das Betätigungselement 34 eines Dehnstoffsystems 35 belastet und von der anderen Seite her durch eine Feder 36, die entweder nur als Rückstellfeder wirkt oder auch als Gegendruckfeder. Zum Dehnstoffsystem 35 gehört ein hier schematisch angedeuteter Fühlerhohlraum 37 im Mantelendbereich. Das gesamte System ist mit einem Dehnstoff gefüllt, der in Abhängigkeit von der Temperatur sein Volumen ändert, wie dies bei einem festen oder flüssigen Dehnstoff der Fall ist, oder der in Abhängigkeit von der Temperatur seinen Druck ändert, wie dies bei einem Gas oder Flüssigkeits-Dampf-Gemisch der Fall ist. Das Betätigungselement 34 ist mit einem Wellrohr 38 versehen, so daß das Dehnstoffsystem sicher vom Wärmeträgersystem getrennt ist. Das Arbeitselement 34 steht über einen Raum 39 und einen Verbindungskanal 40 mit dem Fühlerhohlraum 37 in Verbindung. Die Größe des Raums 39 ist durch eine Justierschraube 41 veränderbar. Auf diese Weise kann bei den Stoffen mit Volumenänderung eine Justierung des Schiebers 29 vorgenommen werden. Bei einem Dehnstoff mit Druckänderung kann der gleiche Effekt durch Verstellung der Vorspannung der Feder 36 erreicht werden.

In der Ausführungsform besteht der Fühlerhohlraum 37 aus einer Bohrung 37, die achsparallel im Walzenendbereich in der Nähe des zugehörigen Heizkanals 8 verläuft. Diese Bohrung ist über eine Verbindungsbohrung 40 und eine den Raum 39 bildende Axialbohrung mit dem Betätigungselement verbunden.

Wenn im Betrieb eine Bahn die gesamte Walzenlänge bedeckt, wird der Wärmeträger über den Anschlußkanal 18 zugeführt und über den Anschlußkanal 23 abgeführt. Wenn eine Bahn geringerer Breite zu behandeln ist, wird an den Walzenenden weniger Wärme abgeführt. Die Temperatur steigt an. Der Dehnstoff führt zu einer Verschiebung des Schiebers 29, so daß in immer stärkerem Maße der Anschlußkanal 19 und am anderen Ende der Anschlußkanal 24 durchströmt wird. Die Walzenendbereiche werden daher deutlich weniger beheizt. Steigt die Temperatur noch weiter an, wird der Schieber 29 noch weiter verschoben, so daß schließlich nur noch der Anschlußkanal 20 und am anderen Ende der Anschlußkanal 25 durchströmt werden. Auf diese Weise werden die störenden Folgen, die mit einer ständigen Überhitzung der Walzenmantelendbereiche verbunden sind, vermieden.

Von der dargestellten Ausführungsform kann in vielfacher Hinsicht abgewichen werden, ohne den Rahmen der in den Ansprüchen definierten Erfindung zu verlassen. So kann statt des Wellrohres auch ein gut abgedichteter Kolben oder ein mit Dehnstoff gefüllter Blähkörper vorgesehen sein. Man kann auch alle Schieber 29 zu einem gemeinsamen Schieber vereinigen, der gleichzeitig alle Anschlußkanäle eines jeden Walzenendbereiches übersteuert und mit einem einzigen Dehnstoff-Betätigungselement verstellt werden kann. Für die Justierung gibt es auch andere Möglichkeiten, beispielsweise das Nachfüllen des Dehnstoffs über ein Ventil oder eine andere verschließbare Öffnung.

## Patentansprüche

1. Beheizbare Walze (1) für Kalander, Glättwerke u.dgl. mit sich über die Walzenlänge erstreckenden Heizkanälen (8), die je ein Anschlußsystem (9) für die Zufuhr eines Wärmeträgers und ein Anschlußsystem (13) für dessen Abfuhr aufweisen, dadurch gekennzeichnet, daß jedes Anschlußsystem (9, 13) mindestens zwei Anschlußkanäle (18, 19, 20, 23, 24, 25) aufweist, die von einem gemeinsamen Raum (10, 14) ausgehen, mit unterschiedlichem Abstand vom Walzenende (21, 26) in den Heizkanal (8) münden und durch eine Auswahlvorrichtung (22, 27) einzeln wirksam zu machen sind.

2. Walze nach Anspruch 1, dadurch gekennzeichnet, daß die Auswahlvorrichtung (22, 27) durch ein Umschaltventil gebildet ist.

3. Walze nach Anspruch 1 oder 2, dadurch gekennzeichnet, daß die Auswahlvorrichtung (22) einen Schieber (29) mit einer Steueröffnung (30) aufweist, und daß die Öffnungsquerschnitte (31, 32, 33) der Anschlußkanäle (18, 19, 20) längs der Bahn der Steueröffnung (30) nebeneinander angeordnet sind.

4. Walze nach einem der Ansprüche 1 bis 3, dadurch gekennzeichnet, daß die Auswahlvorrichtungen (22, 27) in Abhängigkeit von der Temperatur der Walzenendenabschnitte regelbar sind.

5. Walze nach Anspruch 4, dadurch gekennzeichnet, daß jeder Auswahlvorrichtung (22, 27) ein eigener Temperaturregelkreis zugeordnet ist.

6. Walze nach Anspruch 4 oder 5, dadurch gekennzeichnet, daß die Auswahlvorrichtung (22) durch ein Dehnstoffsystem (35) verstellbar ist, das ein Betätigungselement (34) zur Verstellung der Auswahlvorrichtung und einen Fühlerhohlraum (37) im Mantelendbereich aufweist.

7. Walze nach Anspruch 6, dadurch gekennzeichnet, daß der Fühlerhohlraum (37) eine zum Heizkanal (8) parallele und ihm benachbarte Bohrung aufweist.

## Claims

1. Heatable roll (1) for calenders, polishing stacks and the like, comprising heating channels (8) extending over the length of the roll and each having a connection system (9) for the supply of a heat transfer medium and a connection system (13) for the discharge thereof, characterised in that each connection system (9, 13) has at least two connecting channels (18, 19, 20, 23, 24, 25) which depart from a common space (10, 14), open into the heating channel (8) at varying distances from the end (21, 26) of the roll and can be activated individually by a selection device (22, 27).

2. Roll according to claim 1, characterised in that the selection device (22, 27) is formed by a reversing valve.

3. Roll according to claim 1 or claim 2, characterised in that the selection device (22) has a slide (29) with a control opening (30) and that the opening cross sections (31, 32, 33) of the connecting channels (18, 19, 20) are arranged alongside one another along the path of the control opening (30).

4. Roll according to one of claims 1 to 3, characterised in that the selection devices (22, 27) can be controlled as a function of the temperature of the end portions of the roll.

5. Roll according to claim 4, characterised in that a separate temperature control circuit is associated with each selection device (22, 27).

6. Roll according to claim 4 or claim 5, characterised in that the selection device (22) can be adjusted by means of a flexible-material system (35) which has an actuating element (34) for adjusting the selection device and a sensor cavity (37) in the end region of the shell.

7. Roll according to claim 6, characterised in that the sensor cavity (37) has a bore parallel and adjacent to the heating channel (8).

## Revendications

1. Rouleau chauffant (1) pour calandres, mécanismes de lissage et analogues, comprenant des canaux de chauffage (8) qui s'étendent sur la longueur du rouleau et qui comportent, à l'une de leurs extrémités, un système de liaison (9) pour l'entrée d'un agent caloporteur et, à leur autre extrémité, un système de liaison (13) pour sa sortie, caractérisé en ce que chaque système de liaison (9, 13) comporte au moins trois canaux de liaison (18, 19, 20, 23, 24, 25) qui partent d'une chambre commune (10, 14), débouchent dans le canal de chauffage (8) à des distances différentes de l'extrémité (21, 26) du rouleau et peuvent être sollicités individuellement par un dispositif sélecteur (22, 27).

2. Rouleau selon la revendication 1, caractérisé en ce que le dispositif sélecteur (22, 27) est constitué par une valve de commutation.

3. Rouleau selon la revendication 1 ou 2, caractérisé en ce que le dispositif sélecteur (22) comporte un tiroir (29) pourvu d'un orifice de commande (30), et en ce que les sections (31, 32, 33) des orifices des canaux de liaison (18, 19, 20) se trouvent côte à côte le long du trajet de l'orifice de commande (30).

4. Rouleau selon l'une des revendications 1 à 3, caractérisé en ce que les dispositifs sélecteurs (22, 27) peuvent être réglés en fonction de la température des parties extrêmes du rouleau.

5. Rouleau selon la revendication 4, caractérisé en ce qu'un circuit de régulation de température distinct est associé à chaque dispositif sélecteur (22, 27).

6. Rouleau selon la revendication 4 ou 5, caractérisé en ce que le dispositif sélecteur (22) est réglé par un système à substance expansible (35) qui comporte un élément d'actionnement (34) pour régler le dispositif sélecteur et une cavité de détection (37) dans la zone périphérique extrême.

7. Rouleau selon la revendication 6, caractérisé en ce que la cavité de détection (37) comporte un trou parallèle au canal de chauffage (8) et situé à son voisinage.
